# FASCICULE DE BREVET EUROPEEN

(11) **EP 3 525 236 B1**
(45) Date de publication et mention de la délivrance du brevet: **06.05.2026**
(21) Numéro de dépôt: 19153676.2
(22) Date de dépôt: 25.01.2019
(51) Int. Cl.: H01L 23/58, G06K 19/073

(54) **PROCÉDÉ DE DÉTECTION D'UNE ATTEINTE À L'INTÉGRITÉ D'UN SUBSTRAT SEMI-CONDUCTEUR D'UN CIRCUIT INTÉGRÉ DEPUIS SA FACE ARRIÈRE, ET DISPOSITIF CORRESPONDANT**
VERFAHREN ZUR ERFASSUNG EINER BEEINTRÄCHTIGUNG DER INTEGRITÄT EINES HALBLEITERSUBSTRATS EINES INTEGRIERTEN SCHALTKREISES VON SEINER RÜCKSEITE AUS, UND ENTSPRECHENDE VORRICHTUNG
METHOD OF DETECTING VIOLATION OF THE INTEGRITY OF A SEMI-CONDUCTOR SUBSTRATE OF AN INTEGRATED CIRCUIT FROM THE REAR SURFACE THEREOF, AND CORRESPONDING DEVICE

(30) Priorité: 07.02.2018 FR 1851011
(43) Date de publication de la demande: 14.08.2019
(73) Titulaire: STMicroelectronics (Rousset) SAS, 13790 Rousset (FR)
(72) Inventeur: SARAFIANOS, Alexandre, 83910 Pourrières (FR); NICOLAS, Bruno, 13400 Aubagne (FR); FRONTE, Daniele, 13790 Rousset (FR)
(74) Mandataire: Casalonga

(56) Documents cités:
- WO-A2-2009/016589
- FR-A1- 2 986 356
- FR-A1- 2 998 419
- US-A1- 2016 042 199

## Description

Des modes de réalisation et de mise en œuvre de l'invention concernent les circuits intégrés, et plus particulièrement la détection d'une éventuelle attaque à l'intégrité du substrat d'un circuit intégré.

Les circuits intégrés, en particulier ceux équipés de mémoires contenant des informations sensibles, doivent être autant que possible protégés contre les attaques, notamment les attaques visant à découvrir des données stockées.

Parmi les attaques possibles pour extraire des données confidentielles d'une mémoire d'un circuit intégré, par exemple une mémoire protégée d'une carte à puce, on peut citer des attaques dites par injection de faute (DFA, ou « Differential Fault Analysis ») qui prévoient de perturber le fonctionnement et/ou le contenu de la mémoire, ou encore de modifier le fonctionnement logique du circuit, par exemple au moyen d'un rayonnement (laser, infrarouge, rayons X, etc.) émis à travers la face arrière de la puce.

Ces attaques peuvent par exemple être effectuées au moyen d'une sonde ionique focalisée (FIB, « Focus Ion Beam » selon l'acronyme anglo-saxon usuel), utilisant un faisceau d'ions focalisé pour usiner ou déposer des matériaux à l'échelle nanométrique.

L'efficacité de ces attaques augmente lorsque le substrat du circuit intégré est aminci par l'attaquant, depuis sa face arrière de façon à se rapprocher le plus possible des composants du circuit intégré, réalisés au niveau de sa face avant.

Une étape liminaire d'un tel amincissement peut comprendre par exemple un polissage mécanique ou mécano-chimique depuis la face arrière.

Il est donc particulièrement utile de chercher à protéger le circuit intégré contre une attaque à partir de la face arrière du substrat.

Il existe un besoin de pouvoir détecter une atteinte à l'intégrité du substrat depuis sa face arrière, permettant de protéger les circuits intégrés contre ce type d'attaques.

Les publications WO2009/016589A2, US2016/042199A1 et FR2998419A1 décrivent des techniques de protection de circuits intégrés contre des attaques à partir de la face arrière.

La publication WO2009/016589A2 décrit un dispositif semi-conducteur inviolable dans lequel un circuit de sécurité est disposé sur le premier côté connecté aux liaisons conductrices d'électricité à travers le substrat et est agencé pour mesurer au moins deux valeurs de résistance de la couche de protection conductrice d'électricité à travers les connexions conductrices d'électricité à travers le substrat. Le circuit de sécurité est en outre aménagé pour comparer les valeurs de résistance mesurées avec les valeurs de résistance de référence.

La publication US2016/042199A1 décrit un dispositif de sécurité pour protéger les circuits intégrés contre les attaques de sécurité arrière. Lorsqu'un attaquant fraise le substrat ou fait une tranchée dans le substrat, la résistance du substrat change. En surveillant la différence de tension, la tentative d'attaque peut être détectée.

La publication FR2998419A1 décrit un circuit intégré comprenant un dispositif de détection d'une variation de la résistance du substrat.

Selon des modes de mise en œuvre et de réalisation, il est proposé de répondre à ce besoin avec une solution simple à mettre en œuvre, garantissant une meilleure sécurité, et requérant une faible surface pour sa réalisation sur le substrat semiconducteur.

L'invention est définie par les revendications indépendantes.

Des modes de mise en œuvre et de réalisation de l'invention sont définis par les revendications dépendantes.

Par « prise de contact » on entend des prises de contact substrat classiquement présentes dans les réalisations de circuits intégrés et par exemple dédiées à la polarisation du substrat.

Ces prises de contact peuvent être réalisées par des implantations de régions surdopées, réparties sur la face avant du substrat.

La mesure résistive du substrat effectuée sur n prises de contact correspond à une mesure de la valeur résistive équivalente de n résistances (chacune résultant de la résistivité du substrat) connectées en parallèle. Une valeur résistive nominale selon cette mesure décroît ainsi en 1/n.

Par « valeur résistive nominale », on entend la valeur résistive raisonnablement attendue lors d'une mesure effectuée sur une structure n'ayant pas subi d'atteinte à son intégrité.

Par « signal d'alarme » on entend par exemple un signal permettant de déclencher des moyens classiques de contre-mesures destinés à contrecarrer une telle attaque, voire de stopper le fonctionnement du circuit intégré.

D'autres avantages et caractéristiques de l'invention apparaîtront à l'examen de la description détaillée de modes de mise en œuvre et de réalisation de l'invention, nullement limitatifs, et des dessins annexés sur lesquels :
- la figure 1 représente une vue en coupe d'un circuit intégré équipant une carte à puce ;
- les figures 2 à 8 illustrent schématiquement différents modes de mise en œuvre et de réalisation de l'invention.

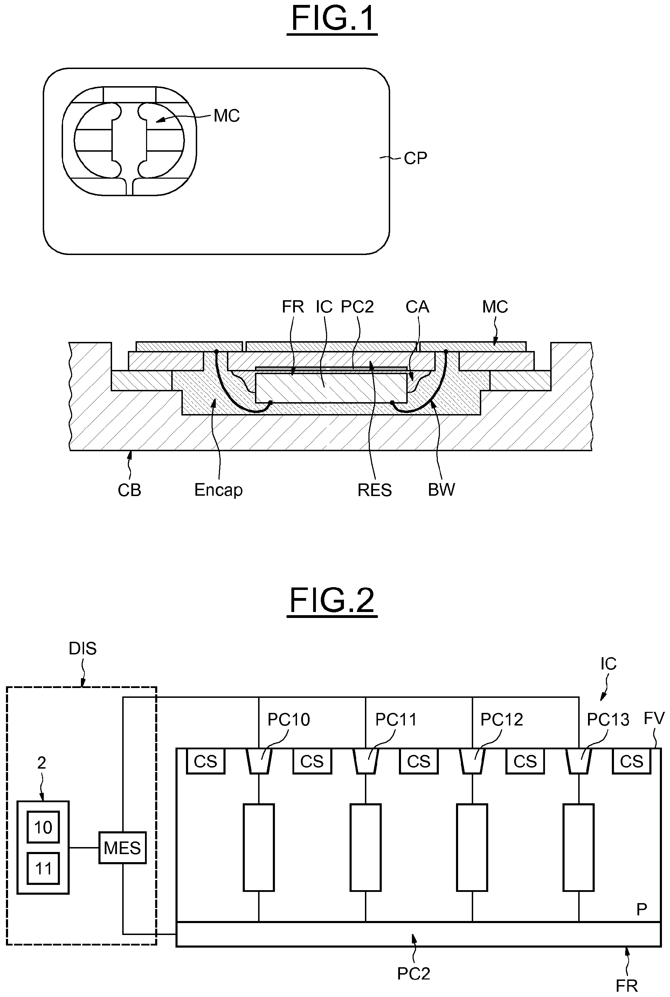

La figure 1 représente un exemple de circuit intégré IC équipant une carte à puce CP.

Une carte à puce CP typique est illustrée schématiquement sur le haut de la figure 1. Le circuit intégré IC est assemblé dans le corps de carte CB de la carte à puce CP, sous des contacts MC. Une coupe de cet assemblage est représentée sur le bas de la figure 1.

Le circuit intégré IC comprend classiquement un substrat semiconducteur surmonté par une partie d'interconnexion (BEOL : Back End Of Lines).

Le circuit intégré IC est recouvert d'une plaque électriquement conductrice PC2. Cette plaque est collée sur la face arrière FR dudit substrat par une couche conductrice adhésive CA et le rattache à une face d'un socle en résine RES.

Le socle en résine RES supporte sur sa face opposée des contacts MC dédiés à assurer les connexions du circuit intégré IC avec un terminal tel qu'un lecteur de cartes.

Le circuit intégré IC est encapsulé dans une couche d'encapsulation isolante Encap.

La couche d'encapsulation isolante Encap est elle-même encapsulée dans un corps de carte CB.

Les connexions entre les contacts MC et le circuit intégré IC sont réalisées au moyen de fils BW, dans une configuration typique de puce retournée (« Flip chip » selon le vocable anglosaxon usuel), les fils BW étant soudés d'une part auxdits contacts MC, et d'autre part à des plots de contact (« pads » en langue anglaise) formés sur le dernier niveau de métallisation de la partie d'interconnexion.

L'ensemble formé par la plaque électriquement conductrice PC2, la couche conductrice adhésive CA et la résine RES, forme un enrobage du circuit intégré IC.

Cela n'exclut pas la possibilité d'utiliser d'autres enrobages connus dans le domaine des circuits intégrés, par exemple adaptés à une autre application qu'une carte à puce.

La figure 2 représente un exemple de mode de réalisation du circuit intégré IC.

Le circuit intégré IC comporte un substrat semiconducteur ayant une face avant FV, une face arrière FR et des prises de contact PCi, avec i ∈ {10; 11; 12; 13}, réparties au niveau de la face avant FV.

Typiquement, le substrat semiconducteur inclut des caissons semiconducteurs CS électriquement isolés du reste du substrat, par exemple par une structure du type triple caisson (« triple well » selon le vocable anglosaxon usuel) classique et connue en soi.

Dans cet exemple, le circuit intégré comprend un bloc de détection DIS connecté à la plaque électriquement conductrice PC2 et aux prises de contact PCi. Le bloc de détection DIS permet de mesurer la valeur résistive du substrat entre r prises de contact PCi, r étant défini en fonction du type de mesure à effectuer, et la plaque électriquement conductrice PC2.

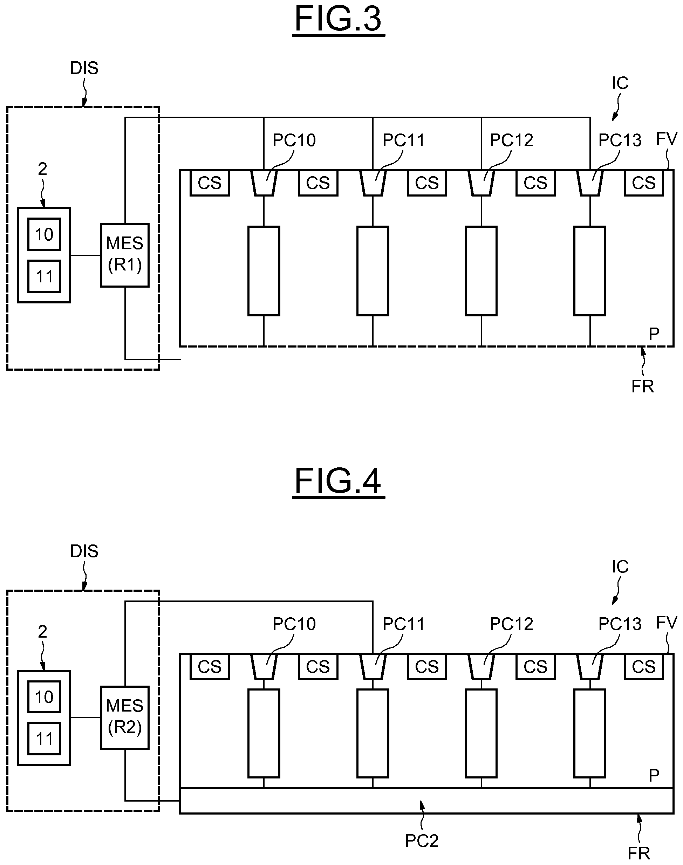

Dans la suite notamment en relation avec les figures 3 et 4, le nombre r prendra une valeur n lors d'une première mesure, et prendra une autre valeur m lors d'une deuxième mesure.

Le bloc de détection DIS permet également d'effectuer une troisième mesure de la valeur résistive du substrat entre uniquement des prises de contact PCi.

Par exemple, le bloc de détection DIS comporte un circuit de mesure MES configuré pour effectuer les mesures desdites valeurs résistives du substrat. Le circuit de mesure, de structure classique, peut délivrer une grandeur physique représentative de la valeur résistive du substrat, par exemple une tension si l'on fait circuler un courant de valeur connue dans le substrat entre les prises de contact et la plaque ou bien un courant si l'on applique une tension de valeur connue entre les prises de contact et la plaque.

Le bloc de détection DIS comprend par ailleurs deux circuits de comparaison 10, 11 permettant de comparer la valeur résistive du substrat mesurée, à une valeur résistive nominale du substrat.

Ici et dans la suite, on entend par « valeur résistive nominale », la valeur résistive raisonnablement attendue lors d'une mesure effectuée sur une structure n'ayant pas subi d'atteinte à son intégrité. Différentes valeurs résistives nominales seront respectivement associées à différentes mesures.

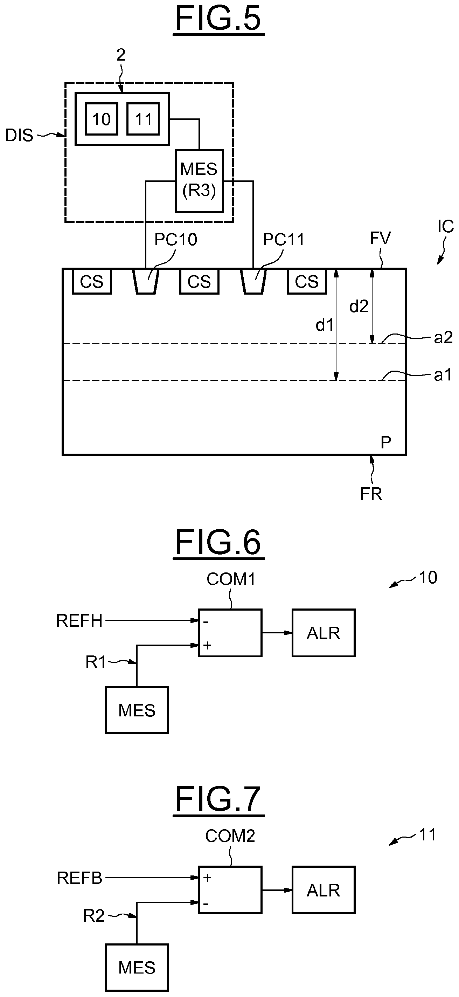

Les circuits de comparaison 10, 11 sont décrits dans la suite, en relation avec les figures 6, 7 et 8.

La figure 3 représente le circuit intégré IC après avoir subi une ouverture de l'enrobage en regard de la face arrière FR.

Plus précisément, la plaque électriquement conductrice PC2 décrite précédemment en relation avec les figures 1 et 2 a été retirée, découvrant ainsi la face arrière FR du substrat.

Dans cet état, le bloc de détection DIS va effectuer la première mesure de la valeur résistive R1 entre n prises de contact correspondant à une mesure de la valeur résistive équivalente de n résistances connectées en parallèle, et une borne normalement reliée à la plaque électriquement conductrice PC2.

Le retrait de la plaque électriquement conductrice PC2 conduit à une forte augmentation de la résistance du substrat.

Le nombre n est avantageusement choisi de façon à ce que la valeur résistive nominale correspondant à la première mesure soit suffisamment faible pour détecter facilement une augmentation de la valeur résistive mesurée. Dans cet exemple, un retrait de la plaque électriquement conductrice PC2 conduit à une valeur résistive mesurée très élevée.

La valeur résistive R1 du substrat issue de la première mesure est alors envoyée dans le circuit de comparaison 10 configuré pour comparer la valeur résistive R1 du substrat issue de la première mesure avec une première valeur résistive nominale du substrat REFH. Si la valeur résistive R1 du substrat issue de la première mesure est supérieure à la première valeur résistive nominale REFH, le bloc de détection a détecté un retrait d'au moins une partie de ladite plaque électriquement conductrice PC2.

La figure 4 représente le circuit intégré IC après un amincissement du substrat et remise de la plaque électriquement conductrice PC2.

Par exemple, pour extraire des données confidentielles d'une mémoire d'un circuit intégré, un attaquant a besoin d'amincir le substrat afin de se rapprocher le plus possible des composants du circuit intégré, réalisés au niveau de sa face avant.

Un tel amincissement peut comprendre par exemple un polissage mécano-chimique depuis la face arrière, et/ou un usinage par exemple via une sonde ionique focalisée FIB.

Après l'amincissement, l'attaquant peut déposer une plaque électriquement conductrice PC2 sur la face arrière FR.

L'amincissement du substrat semiconducteur conduit à une diminution de la valeur résistive du substrat entre des prises de contact PCi, et la plaque électriquement conductrice PC2.

Pour détecter un amincissement, on réalise la deuxième mesure de la valeur résistive R2 du substrat entre m prises de contact correspondant à une mesure de la valeur résistive équivalente de m résistances connectées en parallèle, et la plaque électriquement conductrice PC2. Une valeur résistive nominale selon cette mesure décroît ainsi en 1/m.

La deuxième mesure est semblable à la première mesure, à ceci près que le nombre m est avantageusement choisi de façon à ce que la valeur résistive nominale correspondante soit suffisamment grande pour détecter facilement une diminution de la valeur résistive mesurée.

La répartition géométrique des m prises de contact sur la face avant du substrat est choisie de façon avantageuse pour effectuer une telle mesure. Par exemple, la mesure peut être effectuée globalement dans le substrat, ou séquentiellement dans des régions locales du substrat.

La valeur résistive R2 du substrat issue de la deuxième mesure est envoyée dans un circuit de comparaison 11 configuré pour comparer la valeur résistive R2 du substrat issue de la deuxième mesure avec une deuxième valeur résistive nominale du substrat REFB. Si la valeur résistive R2 du substrat issue de la deuxième mesure est inférieure à ladite deuxième valeur résistive nominale REFB, un amincissement du substrat est détecté par le bloc de détection.

La figure 5 illustre schématiquement le circuit intégré IC après plusieurs opérations d'amincissement a1 et a2 conduisant respectivement à des épaisseurs de substrat d1 et d2.

Si on amincit le substrat pour s'approcher au plus près d'une région d'intérêt des circuits formés dans les caissons CS, il est probable que l'opération d'amincissement atteigne, au moins sur une partie du substrat, une région d'isolation telle que le fond d'un caisson CS ou même une région d'isolation latérale du type tranchée d'isolation peu profonde STI (« Shallow Trench Isolation »), ou oxyde local (LOCOS pour « LOCal Oxydation of Silicon » selon le terme usuel anglosaxon).

Dans ce cas, deux prises de contact peuvent se retrouver électriquement isolées l'une de l'autre, ou bien reliées par un chemin résistif via le reste du substrat plus long que dans une configuration inaltérée, et alors la valeur résistive R3 du substrat issue de la troisième mesure entre des prises de contact PCi augmente fortement. Cela correspond par abus de langage à un circuit-ouvert.

On peut être amené à réaliser une connexion électrique, dite court-circuit, entre deux prises de contact PCi, en déposant, par exemple, un matériau électriquement conducteur entre les deux prises de contact.

La valeur résistive R3 issue de la troisième mesure est envoyée dans les circuits de comparaison 10 et 11 dans les deux cas d'atteinte à l'intégrité du substrat, c'est-à-dire, la réalisation d'un circuit-ouvert ou d'un court-circuit.

Si la valeur résistive R3 du substrat issue de la troisième mesure est supérieure à une valeur résistive nominale correspondante dudit substrat REFH2, le circuit de comparaison 10 génère un signal d'alarme.

Si la valeur résistive R3 du substrat issue de la troisième mesure est inférieure à une autre valeur résistive nominale correspondante dudit substrat REFB2, le circuit de comparaison 11 génère un signal d'alarme.

La figure 6 illustre schématiquement le premier circuit de comparaison 10 pour mettre en œuvre la première détection d'une atteinte à l'intégrité du substrat en relation avec la première mesure, décrite précédemment en relation avec la figure 3.

Après avoir réalisé la première mesure, la valeur résistive mesurée R1 est envoyée sur une entrée non-inverseuse d'un comparateur COM 1.

Une entrée inverseuse prend en entrée une première valeur résistive nominale REFH du substrat.

Le comparateur COM1 compare les deux valeurs reçues en entrée sur ses deux bornes et génère un signal d'alarme ALR si la valeur résistive R1 issue de la première mesure est supérieure à la première valeur résistive nominale REFH du substrat.

Ainsi, si on détecte un retrait de la plaque électriquement conductrice, le signal d'alarme ALR sera généré.

Le signal d'alarme ALR permet par exemple de déclencher des moyens classiques de contre-mesures destinés à contrecarrer l'attaque réalisée sur le substrat.

La figure 7 illustre schématiquement le deuxième circuit de comparaison 11 pour mettre en œuvre la deuxième détection d'une atteinte à l'intégrité du substrat en relation avec la deuxième mesure, décrite précédemment en relation avec la figure 4.

La valeur résistive mesurée R2 issue de la deuxième mesure est envoyée sur une entrée inverseuse d'un comparateur COM2.

Une entrée non-inverseuse prend en entrée une deuxième valeur résistive nominale REFB du substrat.

Le comparateur COM2 compare les deux valeurs reçues en entrée sur ses deux bornes et génère un signal d'alarme ALR si la valeur résistive R2 issue de la deuxième mesure est inférieure à la valeur résistive nominale REFB du substrat.

Ainsi, si on détecte un amincissement du substrat, le signal d'alarme ALR sera généré.

De même, le signal d'alarme ALR permet par exemple de déclencher des moyens classiques de contre-mesures destinés à contrecarrer l'attaque réalisée sur le substrat.

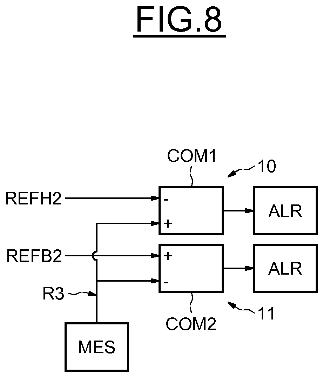

La figure 8 illustre schématiquement les deux blocs de comparaison 10 et 11 relativement à la troisième mesure.

Après la réalisation de la troisième mesure, la valeur résistive mesurée R3 est envoyée sur l'entrée non-inverseuse premier comparateur COM1, et sur l'entrée inverseuse d'un deuxième comparateur COM2.

L'entrée inverseuse du comparateur COM1 reçoit une troisième valeur résistive nominale REFH2 du substrat.

L'entrée non-inverseuse du deuxième comparateur COM2 reçoit une autre troisième valeur résistive nominale REFB du substrat.

Le premier comparateur COM1 compare les deux valeurs reçues en entrée sur ses deux bornes et génère un signal d'alarme ALR si la valeur résistive R3 issue de la troisième mesure est supérieure à la valeur résistive nominale REFH2 du substrat.

Ainsi, si on a un circuit ouvert, le signal d'alarme ALR sera généré.

Le deuxième comparateur COM2 compare les deux valeurs reçues en entrée sur ses deux bornes et génère un signal d'alarme ALR si la valeur résistive R3 issue de la troisième mesure est inférieure à la valeur résistive nominale REFB2 du substrat.

Ainsi, si on a un court-circuit, le signal d'alarme ALR est généré.

De même, le signal d'alarme ALR permet par exemple de déclencher des moyens classiques de contre-mesures destinés à contrecarrer l'attaque réalisée sur le substrat.

Par ailleurs, l'invention n'est pas limitée à ces modes de réalisation mais en embrasse toutes les variantes, par exemple des combinaisons non-décrites de prises de contact peuvent être utilisées pour mettre en œuvre les première, deuxième ou troisième mesures, ainsi que l'utilisation de moyens connus non-décrits pour mettre en œuvre lesdites mesures.

## Revendications

1. Procédé de détection d'une atteinte à l'intégrité d'un substrat semi-conducteur (P) d'un circuit intégré (CI) protégé par un enrobage, le substrat comprenant une face avant (FV) et une face arrière (FR), un ensemble de prises de contact (PC1) mutuellement électriquement couplées et réparties au niveau de la face avant (FV), et une plaque électriquement conductrice (PC2) à l'intérieur de l'enrobage et fixée sur la face arrière du substrat (FR), cette atteinte étant susceptible d'être effectuée depuis la face arrière (FR) du substrat, le procédé comprenant une détection d'une ouverture de l'enrobage en regard de la face arrière (FR) du substrat et comprenant en outre une détection d'un amincissement du substrat à partir de la face arrière (FR), dans lequel la détection de l'amincissement comprend une première mesure d'une valeur résistive (R2) du substrat entre l'ensemble de prises de contact (PC1), et la plaque électriquement conductrice (PC2),
le procédé comprenant une génération d'un signal d'alarme (ALR), indiquant que la plaque électriquement conductrice (PC2) est une deuxième plaque conductrice (PC2) qui a été déposée sur la face arrière après l'amincissement du substrat, si ladite valeur résistive (R2) issue de la première mesure est inférieure à une première valeur résistive nominale (REFB) dudit substrat ladite première valeur résistive nominale (REFB) étant la valeur résistive d'une mesure effectuée sur le substrat n'ayant pas subi d'atteinte à son intégrité.

2. Procédé selon la revendication 1, dans lequel la détection comprend une deuxième mesure d'une valeur résistive (R3) du substrat entre au moins deux prises de contact (PC10, PC11).

3. Procédé selon la revendication 2, comprenant une génération d'un signal d'alarme (ALR) si ladite valeur résistive (R3) issue de la deuxième mesure est inférieure à une première deuxième valeur résistive nominale (REFB) du substrat ou supérieure à une deuxième deuxième valeur résistive nominale (REFH) du substrat.

4. Circuit intégré comprenant un substrat semi-conducteur (P) protégé par un enrobage, ayant une face arrière (FR) et une face avant (FV), et des moyens de détection d'une atteinte à l'intégrité dudit substrat (P) susceptible d'être effectuée depuis sa face arrière, configurés pour détecter une ouverture de l'enrobage en regard de la face arrière du substrat, dans lequel les moyens de détection comprennent un bloc de détection configuré pour détecter un amincissement du substrat à partir de la face arrière (FR), et un ensemble de prises de contact (PC1) mutuellement électriquement couplées réparties au niveau de la face avant du substrat, et une plaque électriquement conductrice (PC2) à l'intérieur de l'enrobage et fixée sur la face arrière (FR) du substrat,
dans lequel, pour détecter un amincissement du substrat à partir de la face arrière, le bloc de détection est configuré pour effectuer une première mesure d'une valeur résistive (R2) du substrat entre l'ensemble de prises de contact (PC1), et la plaque électriquement conductrice (PC2)
le bloc de détection étant configuré pour générer un signal d'alarme (ALR), indiquant que la plaque électriquement conductrice (PC2) est une deuxième plaque conductrice (PC2) qui a été déposée sur la face arrière après l'amincissement du substrat, si ladite valeur résistive (R2) issue de la première mesure est inférieure à une première valeur résistive nominale (REFB) du substrat ladite première valeur résistive nominale (REFB) étant la valeur résistive d'une mesure effectuée sur le substrat n'ayant pas subi d'atteinte à son intégrité.

5. Circuit intégré selon la revendication 4, dans lequel, pour détecter un amincissement du substrat à partir de la face arrière, le bloc de détection est configuré pour effectuer une deuxième mesure d'une valeur résistive (R3) du substrat entre au moins deux prises de contact (PC10, PC11).

6. Circuit intégré selon la revendication 5, dans lequel le bloc de détection est configuré pour générer un signal d'alarme (ALR) si ladite valeur résistive (R3) issue de la deuxième mesure est inférieure à une première deuxième valeur résistive nominale (REFB) du substrat ou supérieure à une deuxième deuxième valeur résistive nominale (REFH) du substrat.

7. Appareil électronique, tel qu'une carte à puce (CP), comportant un circuit intégré (CI) selon l'une des revendications 4 à 6.

## Patentansprüche

1. Verfahren zum Erkennen einer Beeinträchtigung der Integrität eines Halbleitersubstrats (P) einer durch eine Umhüllung geschützten integrierten Schaltung (IC), wobei das Substrat eine Vorderseite (FV) und eine Rückseite (FR), eine Gruppe von Kontaktaufnahmen (PC1), die elektrisch miteinander gekoppelt und auf der Vorderseite (FV) verteilt sind, und eine elektrisch leitfähige Platte (PC2) innerhalb der Umhüllung, die auf der Rückseite des Substrats (FR) befestigt ist, umfasst, wobei diese Beeinträchtigung von der Rückseite (FR) des Substrats aus durchgeführt werden kann, wobei das Verfahren das Erkennen einer Öffnung der Umhüllung gegenüber der Rückseite (FR) des Substrats und ferner das Erkennen einer Ausdünnung des Substrats von der Rückseite (FR) aus umfasst, wobei das Erkennen der Ausdünnung eine erste Messung eines Widerstandswerts (R2) des Substrats zwischen der Gruppe von Kontaktaufnahmen (PC1) und der elektrisch leitfähigen Platte (PC2) umfasst,
wobei das Verfahren das Erzeugen eines Alarmsignals (ALR) umfasst, das angibt, dass die elektrisch leitfähige Platte (PC2) eine zweite leitfähige Platte (PC2) ist, die nach dem Ausdünnen des Substrats auf der Rückseite aufgebracht wurde, wenn der aus der ersten Messung resultierende Widerstandswert (R2) kleiner als ein erster Nennwiderstandswert (REFB) des Substrats ist, wobei der erste Nennwiderstandswert (REFB) der Widerstandswert einer Messung ist, die an dem Substrat durchgeführt wurde, dessen Integrität nicht beeinträchtigt war.

2. Verfahren nach Anspruch 1, wobei das Erkennen eine zweite Messung eines Widerstandswerts (R3) des Substrats zwischen mindestens zwei Kontaktaufnahmen (PC10, PC11) umfasst.

3. Verfahren nach Anspruch 2, umfassend das Erzeugen eines Alarmsignals (ALR), wenn der aus der zweiten Messung resultierende Widerstandswert (R3) kleiner als ein erster zweiter Nennwiderstandswert (REFB) des Substrats oder größer als ein zweiter zweiter Nennwiderstandswert (REFH) des Substrats ist.

4. Integrierte Schaltung, umfassend ein durch eine Umhüllung geschütztes Halbleitersubstrat (P), das eine Rückseite (FR) und eine Vorderseite (FV) aufweist, und Mittel zur Erkennung, die von seiner Rückseite aus durchgeführt werden kann, einer Beeinträchtigung der Integrität des Substrats (P), die so eingerichtet sind, dass sie eine Öffnung der Umhüllung gegenüber der Rückseite des Substrats erkennen, wobei die Erkennungsmittel einen Erkennungsblock umfassen, der so eingerichtet ist, dass er eine Ausdünnung des Substrats von der Rückseite (FR) aus erkennt, und eine Gruppe von Kontaktaufnahmen (PC1), die elektrisch miteinander gekoppelt und auf der Vorderseite des Substrats verteilt sind, und eine elektrisch leitfähige Platte (PC2) innerhalb der Umhüllung, die auf der Rückseite (FR) des Substrats befestigt ist,
wobei, um eine Ausdünnung des Substrats von der Rückseite aus zu erkennen, der Detektionsblock so eingerichtet ist, dass er eine erste Messung eines Widerstandswerts (R2) des Substrats zwischen der Gruppe von Kontaktaufnahmen (PC1) und der elektrisch leitfähigen Platte (PC2) durchführt,
wobei der Erkennungsblock so eingerichtet ist, dass er ein Alarmsignal (ALR) erzeugt, das angibt, dass die elektrisch leitfähige Platte (PC2) eine zweite leitfähige Platte (PC2) ist, die nach dem Ausdünnen des Substrats auf der Rückseite aufgebracht wurde, wenn der aus der ersten Messung resultierende Widerstandswert (R2) kleiner als ein erster Nennwiderstandswert (REFB) des Substrats ist, wobei der erste Nennwiderstandswert (REFB) der Widerstandswert einer Messung ist, die an dem Substrat durchgeführt wurde, dessen Integrität nicht beeinträchtigt war.

5. Integrierte Schaltung nach Anspruch 4, wobei, um eine Ausdünnung des Substrats von der Rückseite aus zu erkennen, der Erkennungsblock so eingerichtet ist, dass er eine zweite Messung eines Widerstandswerts (R3) des Substrats zwischen mindestens zwei Kontaktaufnahmen (PC10, PC11) durchführt.

6. Integrierte Schaltung nach Anspruch 5, wobei der Erkennungsblock so eingerichtet ist, dass er ein Alarmsignal (ALR) erzeugt, wenn der aus der zweiten Messung resultierende Widerstandswert (R3) kleiner als ein erster zweiter Nennwiderstandswert (REFB) des Substrats oder größer als ein zweiter zweiter Nennwiderstandswert (REFH) des Substrats ist.

7. Elektronisches Gerät, wie eine Chipkarte (CP), mit einer integrierten Schaltung (IC) nach einem der Ansprüche 4 bis 6.

## Claims

1. A method for detecting disturbance of the integrity of a semiconductor substrate (P) of an integrated circuit (IC) protected by a coating, the substrate comprising a front face (FV) and a rear face (FR), a set of contact pads (PC1) mutually electrically coupled and distributed at the front face (FV), and an electrically conductive plate (PC2) inside the coating and attached to the rear face of the substrate (FR), this disturbance being likely to be caused from the rear face (FR) of the substrate, the method comprising detecting an opening of the coating facing the rear face (FR) of the substrate and further comprising detecting thinning of the substrate from the rear face (FR), wherein detecting thinning comprises a first measurement of a resistive value (R2) of the substrate between the set of contact pads (PC1), and the electrically conductive plate (PC2),
the method comprising generating an alarm signal (ALR), indicating that the electrically conductive plate (PC2) is a second conductive plate (PC2) that has been deposited onto the rear face after thinning the substrate, if said resistive value (R2) derived from the first measurement is less than a first nominal resistive value (REFB) of said substrate, said first nominal resistive value (REFB) being the resistive value of a measurement performed on the substrate that has not suffered any disturbance of its integrity.

2. The method according to claim 1, wherein detecting comprises a second measurement of a resistive value (R3) of the substrate between at least two contact pads (PC10, PC11).

3. The method according to claim 2, comprising generating an alarm signal (ALR) if said resistive value (R3) derived from the second measurement is less than a first second nominal resistive value (REFB) of the substrate or greater than a second second nominal resistive value (REFH) of the substrate.

4. An integrated circuit comprising a semiconductor substrate (P) protected by a coating, having a rear face (FR) and a front face (FV), and means for detecting disturbance of the integrity of said substrate (P) likely to be caused from its rear face, configured to detect an opening of the coating facing the rear face of the substrate, wherein the detection means comprise a detection block configured to detect thinning of the substrate from the rear face (FR), and a set of mutually electrically coupled contact pads (PC1) distributed at the front face of the substrate, and an electrically conductive plate (PC2) inside the coating and attached to the rear face (FR) of the substrate,
wherein, to detect thinning of the substrate from the rear face, the detection block is configured to perform a first measurement of a resistive value (R2) of the substrate between the set of contact pads (PC1), and the electrically conductive plate (PC2)
the detection block being configured to generate an alarm signal (ALR), indicating that the electrically conductive plate (PC2) is a second conductive plate (PC2) that has been deposited onto the rear face after thinning the substrate, if said resistive value (R2) derived from the first measurement is less than a first nominal resistive value (REFB) of the substrate, said first nominal resistive value (REFB) being the resistive value of a measurement performed on the substrate that has not suffered any disturbance of its integrity.

5. The integrated circuit according to claim 4, wherein, to detect thinning of the substrate from the rear face, the detection block is configured to perform a second measurement of a resistive value (R3) of the substrate between at least two contact pads (PC10, PC11).

6. The integrated circuit according to claim 5, wherein the detection block is configured to generate an alarm signal (ALR) if said resistive value (R3) derived from the second measurement is less than a first second nominal resistive value (REFB) of the substrate or greater than a second second nominal resistive value (REFH) of the substrate.

7. An electronic apparatus, such as a smart card (CP), including an integrated circuit (IC) according to one of claims 4 to 6.
